# EUROPEAN PATENT SPECIFICATION

(11) **EP 4 019 296 B1**
(45) Date of publication and mention of the grant of the patent: **19.03.2025**
(21) Application number: 20217274.8
(22) Date of filing: 24.12.2020
(51) Int. Cl.: B60C 23/20, B60C 23/04

(54) **TYRE TEMPERATURE ANALYSIS METHODS AND SYSTEMS**
VERFAHREN UND SYSTEME ZUR ANALYSE DER REIFENTEMPERATUR
PROCÉDÉS ET SYSTÈMES D'ANALYSE DE LA TEMPÉRATURE DES PNEUS

(43) Date of publication of application: 29.06.2022
(73) Proprietor: Bridgestone Mobility Solutions B.V., 1083 HK Amsterdam (NL); Bridgestone Europe NV/SA, 1930 Zaventem (BE)
(72) Inventor: VERHEIJEN, Paul Roeland, Amsterdam 1011 AC (NL); PURVES, Neil James, 1932 Zaventum (BE); MEISSNER, Christian, 04103 Leipzig (DE)
(74) Representative: Dehns

(56) References cited:
- WO-A1-2020/190430
- US-A1- 2004 261 511

## Description

### Technical Field

The present invention relates to a method, a server and a system for analysing tyre temperature data.

### Background

Many vehicles are equipped with a tyre pressure monitoring system (TPMS) which monitors the air pressure and temperature of the tyres on the vehicle. The TPMS is typically configured to issue a warning if the pressure or temperature of a given tyre passes a threshold. Some TPMSs comprise a pressure sensor arranged to measure the pressure within the tyre, as well as a temperature sensor arranged to measure the temperature of the tyre. Such TPMSs are typically known as 'direct' TMPSs as the pressure and temperature are determined by direct measurement within the tyre. In many TPMSs the pressure reading from the pressure sensor is adjusted based on the temperature reading from the temperature sensor so that the TPMS is capable of accounting for temperature changes. As will be appreciated, when the temperature drops, the pressure may also drop, and so by accounting for the temperature in the pressure measurement, erroneous warnings may be avoided.

Whilst current TPMSs may be capable of accounting for changes in temperature when analysing the pressure readings, the temperature reading from the temperature sensor is not always accurate and this may lead to improper adjustment of the measured pressure. The inaccurate temperature reading may also result in the issuance of false warnings, when the TPMS is configured to issue a warning based on temperature.

US 2004/261511 A1 discloses a method comprising estimating internal air temperature according to the speed of the vehicle and the temperature external to the vehicle. WO 2020/190430 A1 discloses a real time tire pressure sensing system which includes sensors to collectively generate signals corresponding to a contained tire air temperature, a contained inflation pressure, and an ambient temperature associated with a tire mounted on the vehicle.

Accordingly, there remains a need for improved tyre monitoring.

### Summary of the Invention

According to a first aspect of the present invention, there is provided a method of analysing tyre temperature data from a temperature sensor arranged to measure the temperature of a tyre on a vehicle, the method comprising:
receiving tyre temperature data from the temperature sensor;
receiving further data indicative of at least one different parameter related to the vehicle;
determining expected temperature data based at least on the further data;
comparing the tyre temperature data to the expected temperature data; and
rectifying the tyre temperature data based on the comparison of the tyre temperature data to the expected temperature data.

It will be appreciated that in this method, the further data indicative of at least one different parameter related to the vehicle is used to determine expected temperature data which is then used as a comparison for the tyre temperature data. Accordingly, this may allow analysis of whether the tyre temperature data accurately reflects an actual temperature of the tyre. Knowing whether the tyre temperature data accurately reflects the actual temperature may be advantageous when the tyre temperature is used, for example, to calibrate pressure readings, or when the tyre temperature data itself is used to issue a warning in relation to the tyre. The method may, therefore, help to minimise the number of false positives in relation to warnings which are related to a tyre. As will be appreciated, the further data may be used as a means to validate the tyre temperature data collected by the temperature sensor.

The at least one different parameter may be any parameter related to the vehicle, other than a direct temperature measurement of a tyre, which may be used in determining the expected temperature. For example, the further data may comprise ambient temperature data indicative of the temperature of the environment in which the vehicle is present. Whilst this is still temperature data, it is considered to be a different parameter as it is the temperature of the environment in which the vehicle is present, rather than the temperature of the tyre itself. Of course, any suitable further data indicative of any different parameter which may be used in determining the expected temperature may be received and used.

The tyre temperature data may comprise a single tyre temperature reading, and the further temperature data may comprise data sufficient to determine a single expected temperature value. However, in some examples, the tyre temperature data may comprise a plurality tyre temperature readings, and the further data may comprise a plurality of data suitable for the generation of a plurality of corresponding expected temperature values. The use of a larger amount of data may allow for more sophisticated comparison of the tyre temperature data to the expected temperature data.

As mentioned above, the further data may comprise any data that can be used to determine expected temperature data. In a set of embodiments, the further data comprises telematics data. The telematics data may comprise any data related to the vehicle which may be used to at least partially determine the expected temperature data. The telematics data may comprise at least one of: ambient temperature data of the environment in which the vehicle is present; weather data; tyre related data; vehicle weight data; speed data; acceleration data; and/or braking data. The weather data may, for example, comprise data relating to weather conditions such as an indication as to whether it is sunny, cloudy, raining, snowing etc. The weather data may also comprise data relating to the direction of the sun relative to an orientation of the vehicle. As will be appreciated, all of this information may be used in determining the expected temperature data. For example, if it is sunny, it may be determined that the temperature will have a higher value compared to if it were cloudy. Additionally, if the sun is shining on one side of the vehicle, tyres on that side of the vehicle may be expected to have a higher temperature than tyres on a side of the vehicle which is not in the sunlight. The weather data may be obtained from an external service, e.g. a weather service which stores weather conditions for different locations. Alternatively, the weather data may be inferred from characteristics of the vehicle. For example, if the vehicle's wipers are on it may be determined that it is raining, similarly if the fog lights are on, it may be determined that the vehicle is in foggy conditions. All of these conditions may impact the expected temperature.

Tyre related data may comprise any data relating to the tyre, for example: the age of the tyre, the number of miles the tyre has been driven, the tyre fitting location; tyre specific heat coefficient. Such information may contribute towards determining the expected temperature data in any suitable manner. For example, an older tyre may be expected to have a higher temperature than a newer tyre. Similarly, tyres fitted to a location on a vehicle where drive is provided may also be expected to reach a higher temperature.

Vehicle weight data, i.e. the weight of the vehicle, may contribute to the expected temperature data. For example, a heavier vehicle may be expected to have tyres which reach a higher temperature, due to the tyres experiencing increased friction with a driving surface due to the increased weight. Similarly, speed, acceleration and braking may all be used in determining the expected temperature data. For example, a vehicle which travels quickly, and accelerates quickly, may be expected to have tyres which have a higher temperature, at least when compared to a vehicle which travels at a lower speed, and accelerates in a slower manner. The speed, acceleration, braking and/or vehicle weight data may be used to determine how much energy is input to, and output from, the tyre. As will be appreciated, at least a portion of this energy may go towards heating of the tyre and so the expected temperature data may be at least partially determined based on the expected energy input into, and output from, the tyre.

The various types of telematics data described above may all contribute towards the determination of the expected temperature data. The expected temperature data may be determined based on a single type of data, e.g. ambient temperature data, or a combination of a number of different types of data. In a set of embodiments, the further data comprises a plurality of different types of data and the expected temperature data is determined using multiple of the plurality of different types of data. For example, the expected temperature data may be determined based on ambient temperature data, along with speed data, acceleration data and weather data. The combination of multiple different types of further data may improve the accuracy of the expected temperature data and thus improve the comparison that can be performed. Any suitable model which transforms the further data into expected temperature data may be utilised. The above list of telematics data is non-exhaustive, and any other form of data which may be used in the determination of expected temperature data may be employed.

The telematics data may be provided by any suitable source. For example, the ambient temperature data may be provided by a temperature sensor arranged on the vehicle. In a set of embodiments, the telematics data is received from an electronic device, e.g. a telematics device, installed on the vehicle and configured to collect driving data relating to driving of the vehicle. The electronic device may collect further data from another source on the vehicle. For example, the electronic device may collect ambient temperature data from a temperature sensor mounted on the vehicle. For example, the temperature sensor may be part of a camera, a driver's terminal, or any other suitable device, which is mounted to the vehicle. The temperature sensor may collect ambient temperature data which may be wirelessly transmitted to the electronic device. In addition, or alternatively, the electronic device may be capable of generating its own data. For example, the electronic device may comprise a global positioning system (GPS) such that the electronic device is capable of determining the location of the vehicle, as well as other data relating to speed, acceleration, braking, etc.

The comparison of the tyre temperature data and the expected temperature data may comprise any suitable analysis of the data. The comparison may, for example, comprise an analysis to determine a deviation between the tyre temperature data and the expected temperature data. When there is a deviation, and depending on the size of the deviation, it may be concluded that the tyre temperature data does not accurately reflect the actual temperature of the tyre. For example, when the tyre temperature data indicates a tyre temperature of 14 °C and the expected temperature data indicates a temperature of 25 °C, it may be concluded that the tyre temperature data deviates by too much from the expected temperature data and thus does not accurately reflect the actual temperature. In this case, the tyre temperature data may not be suitable for use in the issuance of temperature related warnings, nor in the use of calibration of any tyre pressure readings. The method according to the first aspect of the present invention comprises rectifying the tyre temperature data based on the comparison of the tyre temperature data to the expected temperature data.

The rectification, together with the other steps of the method, may be considered to be part of a calibration process. The rectification may form rectified tyre temperature data. Rectification of the tyre temperature data may advantageously mean that the tyre temperature data can go on to be used in reliable manner. For example, the rectified tyre temperature data may go on to be used in an adjustment of tyre pressure readings when analysing tyre pressures, or be used directly in temperature analysis of the tyres, e.g. when used to issue temperature related warnings. The use of more accurate tyre temperature data may help to minimise the number of false positive warnings which are issued from pressure measurements or direct temperature measurements. The rectification of the tyre temperature data may be performed any number of times, at any frequency, and may be performed continuously to ensure that the tyre temperature data accurately reflects the actual temperature of the tyre.

Rectification of the tyre temperature data may be achieved in any suitable manner. In a set of embodiments, comparing the tyre temperature data and expected temperature data comprises determining a relationship between the tyre temperature data and the further data and wherein rectifying the tyre temperature data comprises adjusting the tyre temperature data based on the relationship. The relationship between the tyre temperature data and expected temperature data may be any relationship that appropriately links the tyre temperature data and the expected temperature data. If the relationship between the tyre temperature data and expected temperature data is linear, determining the relationship may involve determining the offset, i.e. the zeroth order, and the slope, i.e. the first order, of the relationship. Of course, the relationship may be non-linear, and thus determination of the relationship may comprise determining higher order factors of the relationship, i.e. the 2^{nd} order, 3^{rd} order etc. Determining the relationship and rectifying the tyre temperature data based on the relationship may help to ensure that the tyre temperature data can be rectified in the most appropriate manner, thus potentially minimising the number of false positives. Any suitable analysis may be performed to determine the relationship. For example, a regression analysis may be performed. An error on the tyre temperature data may also be determined. The error may be determined using any suitable known method. The error may go on to be used as part of subsequent rectification, or be used as a correction mechanism when analysing whether tyre temperature data meets a deviation condition.

As will be appreciated by those skilled in the art, it may in some instances be possible to determine the relationship based on a single tyre temperature value and a single expected temperature value. However, in a set of examples, the tyre temperature data comprises a plurality of tyre temperature values, and the expected temperature data comprises a plurality of corresponding expected temperature values. In such examples, determining the relationship may comprise determining the relationship based on the plurality of tyre temperature values and the plurality of corresponding expected temperature values. Determining the relationship based on a larger data set in accordance with such examples may allow for a more accurate relationship to be determined, thereby potentially improving the rectification of the tyre temperature data and further minimising the number of false positive warnings.

As discussed above, the further data may comprise any data which can be used to determine expected temperature data and may, for example, comprise telematics data. In a set of embodiments, the further data comprises ambient temperature data relating to a temperature of an environment in which the vehicle is present. In such embodiments, the expected temperature data may substantially correspond to the ambient temperature data. The use of ambient temperature data may allow the expected temperature data to be determined quickly and easily. Of course, the expected temperature data may also be determined based on additional further data. For example, if the ambient temperature data indicates the car is in a 25 °C environment, then the expected temperature data may correspond to 25 °C. This temperature may, however, be adjusted based on further data if appropriate, for example if weather conditions indicate that the vehicle is currently in a sunny environment which is likely to increase the tyre temperatures above the ambient temperature.

The ambient temperate data may be supplied by any suitable source. For example, the ambient temperature data may be determined by another temperature sensor arranged on the vehicle to measure the ambient temperature of the environment in which the vehicle is present. This temperature data may, for example, be obtained via a vehicle bus, e.g. a Controller Area Network (CAN), fleet management system interface (FMS) or an on-board diagnostics (OBD) port which is suitably connected to the temperature sensor. In addition, or alternatively, the ambient temperature data may be obtained based on other telematics data. For example, based on the location of the vehicle, the ambient temperature of the environment in which the vehicle is present may be determined from a suitable weather service. The weather service may be a service which stores ambient temperature values for a plurality of different locations. The weather service may, for example, be a web-based service which is regularly updated and which can be interrogated. In addition, or alternatively, in a set of embodiments, the ambient temperature data may be obtained from a further vehicle in the vicinity of the vehicle. In such cases, it may be assumed that another vehicle in the vicinity of the vehicle will be in the same temperature environment and thus a temperature measurement from another vehicle is still a different parameter relating to the vehicle in question. The further vehicle may be in the same fleet as the vehicle, and wherein optionally multiple vehicles in the fleet of vehicles may be directly wirelessly connected to each other, i.e. in a local connection arrangement, or connected remotely via a server.

The ambient temperature data may also be obtained from an electronic device, e.g. a telematics device, installed on the vehicle which comprises a temperature sensor. The temperature sensor on the electronic device may be configured to measure the ambient temperature of the environment in which the electronic device is present.

In some embodiments, the temperature sensor on the electronic device may be primarily configured to measure the temperature of the electronic device itself. However, as will be appreciated by those skilled in the art, the temperature of the electronic device, at least in some instances, may substantially correspond to the ambient temperature of the environment in which the vehicle is present.

When a vehicle is in motion, various factors may impact the tyre temperature and thus cause the tyre temperature to fluctuate. As a result, it may be harder to determine an accurate relationship between the tyre temperature data and expected temperature data which facilitates rectification of the tyre temperature data. Accordingly, in a set of embodiments, the tyre temperature data and further data relate to a period during which the vehicle was stationary and wherein the period begins following a predetermined time after the vehicle has become stationary. Analysing tyre temperature data and further data relating to the vehicle being stationary may facilitate the determination of a more accurate relationship between the tyre temperature data and expected temperature data determined from the further data. This may facilitate improved rectification of the tyre temperature data. Additionally, as will be appreciated, once a vehicle has become stationary it may take a certain amount of time before the tyres cool down to an ambient temperature. Thus, by using tyre temperature data and further data which begins following a predetermined time after the vehicle has become stationary, it may be possible to exclude data which relates to the cooling of the vehicle tyre which may otherwise cause the determination of an inaccurate relationship.

The predetermined time may be a time which is suitable for allowing the tyre to cool to a relatively stable temperature. Of course, the temperature of the tyre may not be completely stable as it may continue to change even following cooling, e.g. due to changes in environmental temperature. The predetermined time may be set in advance and could be determined by any suitable means. The predetermined time may be at least 1 hour, e.g. at least 2 hours, e.g. at least 3 hours, e.g. at least 4 hours, e.g. at least 5 hours, e.g. at least 6 hours, e.g. at least 7 hours, e.g. at least 8 9 hours, e.g. at least 10 hours, e.g. at least 11 hours, e.g. at least 12 hours. The predetermined time may be dependent on characteristics of the vehicle prior to becoming stationary. For example, if the vehicle has been driven for a long period of time before becoming stationary, its tyres may have an increased temperature and thus require a longer cooling time, compared to if it had only been driven for a short period of time.

The use, i.e. selection, of data which corresponds to the vehicle being stationary may be achieved by any suitable means. It may be possible to determine the state of the vehicle based on the tyre temperature data. For example, when the tyre temperature drops and remains at a lower temperature, it may be possible to determine that the vehicle is stationary. In another set of examples, the stationary state of the vehicle may be determined based on telematics data. For example, it may be determined based on location data. The stationary state may be determined by an electronic device, e.g. a telematics device, on board the vehicle, or it may be determined remotely of the vehicle, e.g. based on telematics data obtained from a telematics device.

In another set of embodiments, the tyre temperature data and further data comprises data which corresponds to a period during which the tyre temperature data comprises temperature readings below a threshold temperature. The threshold temperature may be a temperature which is known to correspond to the tyre being in a cooled state. The threshold temperature may be at least partially defined by the further data. For example, when the further data comprises ambient temperature data, the threshold temperature may correspond to the ambient temperature in which the vehicle is present. Accordingly, when the tyre temperature data indicates that the tyre temperature substantially corresponds to the ambient temperature data, it may be possible to conclude that the vehicle is stationary.

As discussed above, analysing temperature data relating to a period of time in which the vehicle was stationary may improve the comparison of the tyre temperature data and expected temperature data and allow a more accurate relationship to be determined. In a further set of embodiments the tyre temperature data and further data comprise data that corresponds to a period during the night and whilst the vehicle was stationary.

Analysing data that corresponds to a period during the night and whilst the vehicle was stationary may further improve the analysis. By analysing the data corresponding to a period during the night, the effect of other factors which impact the tyre temperature may be minimised. For example, during the night the tyre will not be heated by any direct sunlight which would otherwise increase the temperature of the tyre. The period during the night and whilst the vehicle was stationary may be determined by any suitable means. For example, it may be possible to determine the data which corresponds to this period by analysing the temperature data to determine when the temperature has dropped to a threshold level and which then remains stable. In addition, or alternatively, the period may be determined using other telematics data such as the location of the vehicle. Using a known location of the vehicle, it may be possible to determine a sunset time at the location of the vehicle, and then data after the sunset time may be used.

Particularly in embodiments wherein the tyre temperature data comprises a plurality of tyre temperature values, and wherein the expected temperature data comprises a plurality of corresponding expected temperature values, it may be possible to determine characteristics of the tyre based on the comparison. Accordingly, in a set of embodiments, the method further comprises determining a tyre-specific parameter based on the comparison of the tyre temperature data and the expected temperature data. For example, it may be possible to determine a specific heat transfer coefficient for a tyre. This may be achieved by analysing tyre temperature data and expected temperature data which corresponds to a period in which the tyre is cooling, e.g. immediately after driving until the tyre temperature data reaches a stable temperature. In addition or alternatively, it may be possible to determine the wear of a tyre. For example, a tyre which is more worn may reach the ambient temperature more quickly than a tyre which is less worn. The tyre specific parameter may advantageously be used in further analysis of the tyre temperature data. For example, the tyre specific parameter may itself form further data which may be used in the determination of the expected temperature data.

Comparison of the tyre temperature data and the expected temperature data may be used to perform rectification of the tyre temperature data and also may allow for the determination of a tyre related parameter as discussed above. However, the comparison may also allow for the identification of tyre temperature data which indicates a potential problem with the tyre, or indeed the tyre temperature sensor itself. Thus, according to a set of embodiments, comparing the tyre temperature data to the expected temperature data comprises determining whether the tyre temperature data meets a deviation condition and further comprising issuing a warning if the tyre temperature data does not meet the deviation condition. Accordingly, by determining whether the tyre temperature data meets a deviation condition it may be possible to determine if the tyre temperature data is indicative of a problem with the tyre. For example, if the tyre is excessively hot, it may be concluded that the tyre is too old, has become worn, and/or is damaged. The issuance of a warning may then trigger replacement of the tyre thus ensuring the safety of the vehicle.

As will be appreciated, the tyre temperature data used in the comparison described immediately above may be raw tyre temperature data or it may comprise rectified tyre temperature, which may be obtained using the methods described above. Accordingly, in a further set of embodiments, the tyre temperature data used in comparison to expected temperature data in determining whether the tyre temperature data meets a deviation condition comprises comparing rectified tyre temperature data formed according to any relevant method described above. The rectification of the tyre temperature data to form rectified tyre temperature data and the use of such rectified tyre temperature data when determining whether the tyre temperature data meets a deviation condition may further reduce the number of false positive warnings and thus improve the reliability of the method. Optionally, the further data may comprise a plurality of different types of further data and the expected temperature data may be determined based on multiple of the plurality of different types of further data. The use of a plurality of different types of further data may further improve the reliability of the rectification, and the reliability of the comparison to the deviation condition, thereby potentially further minimising the number of false positive warnings.

The warning may be issued in any suitable manner. For example, the warning may be issued on a user interface on the vehicle, thereby alerting a user of the vehicle to the issue relating to the tyre. In addition or alternatively, the warning may be issued to a user interface on a terminal which is removably mounted on the vehicle. The terminal may, for example, be wirelessly connected to an electronic device, e.g. a telematics device, mounted on the vehicle. In addition, or alternatively, the warning may be issued to a remote user interface, e.g. a web-based user interface. This may, for example, allow a fleet manager to identify the problematic tyre and potentially arrange for a replacement tyre. The use of the expected temperature data, which is determined based on the further data, may reduce the number of false positive warnings which are issued.

The deviation condition may comprise any suitable condition which if not met indicates a potential issue with a tyre. In a set of embodiments, the deviation condition comprises a range of acceptable temperature values. As will be appreciated, the range of acceptable values may be based around the expected temperature data. For example, the range of acceptable temperature values may be a range defined around the expected temperature data, e.g. a given expected temperature value. As an example, for a given tyre temperature value, and a given expected temperature value, the deviation condition may allow for the tyre temperature value to be plus or minus 1 °C, 2 °C, 3 °C, 4 °C, or 5 °C from the expected temperature value. Of course, the deviation condition may be any suitable condition and the temperature differences listed above are merely exemplary. As discussed previously, the expected temperature data may be determined based on a model. Similarly, the deviation condition may be determined based on a model which uses the further data. Accordingly, in a set of embodiments, the deviation condition is defined based at least partly on the further data. For example, the deviation condition may be based on speed data. When the vehicle is moving at a constant speed, the acceptable deviation from the expected temperature data may be less than if the vehicle was travelling at a more varied speed as this may be more likely to cause fluctuations in the measured temperature of the tyre. Use of the further data in defining the deviation condition may therefore minimise the number of false positives which may otherwise occur if the deviation condition was a pre-set condition that was independent of the further data.

Unlike the rectification described above which may optimally be performed based on data relating to the vehicle being in a stationary state, the comparison and issuance of a warning may be performed when the vehicle is stationary or when the vehicle is moving. Accordingly, in a set of embodiments, the further data comprises vehicle motion data relating to movement of the vehicle and/or ambient temperature data relating to an environment in which the vehicle is present.

The vehicle motion data may, for example, comprise speed, acceleration and/or braking data. Such data may be obtained directly from the vehicle, or from an electronic device, e.g. a telematics device, installed on the vehicle. The vehicle motion data and/or the ambient temperature data may be input into a model which determines expected temperature data based on the input data. For example, the expected temperature data may correspond to the ambient temperature data which is adjusted, e.g. increased, based on knowledge that the vehicle has been braking heavily. Braking heavily may cause increased friction between the tyre and the driving surface which may act to increase the tyre temperature. Of course, braking is just one example, and any number of different types of data may define the expected temperature data. The further data may, of course, comprise any other suitable data which may impact the expected temperature data. For example, it may comprise any of the examples of telematics data described above. In the exemplary case of weather related data, knowledge that there is rain or snow on the driving surface may cause the expected temperature data to be reduced, to reflect the expectation that the tyre may lose more heat energy to the driving surface, via the rain or snow, than it would on an otherwise dry surface.

The further data may comprise any other suitable further data which may be used in determining the expected temperature data. For example, the further data may comprise a tyre specific heat transfer coefficient. The tyre specific heat transfer coefficient may already be known for the tyre, or it may have been determined as part of the comparison, as discussed in the embodiments above.

Similarly to embodiments described above, comparison of the tyre temperature data and the expected temperature data may be performed based on tyre temperature data which comprises a plurality of tyre temperature readings, along with expected temperature data which similarly comprises a plurality of expected temperature readings. The comparison may thus be performed on a larger data set which may be particularly advantageous when determining whether the tyre temperature data meets a deviation condition. The comparison may involve analysis of how the tyre temperature data compares to the expected temperature data over a period of time. The period of time for which data is analysed may be defined at least partially depending on how the tyre temperature data is changing. For example, when the tyre temperature data indicates that the tyre temperature is changing slowly, the period of time for which data is analysed may be longer. Alternatively, if the tyre temperature data is changing more rapidly, a shorter period may be required to determine the cause of the temperature changes.

As will be appreciated by those skilled in the art, the tyre temperature data which is analysed as part of the embodiments described above in relation to the issuance of a warning may be raw, unaltered, tyre temperature data. However, such data may not accurately reflect the actual temperature of the tyre and thus in some embodiments, the determination as to whether the tyre temperature data meets the deviation condition may use rectified tyre temperature data, which may be achieved by the embodiments discussed above.

The further data may comprise any data relating to the vehicle to which the temperature data relates. For example, it may comprise ambient temperature data measured by another sensor on the vehicle, or it may comprise ambient temperature data obtained from a weather service using location data relating to the vehicle, or indeed any other suitable data. In a further set of embodiments, the further data comprises data from at least one other vehicle. For example, the further data may comprise ambient temperature data obtained from another vehicle which is determined to be in the same vicinity as the vehicle, and thus indicative of the ambient temperature of the environment in which the vehicle is present. This may, for example, allow for the use of ambient temperature sensors on other vehicles when the vehicle being analysed doesn't comprise an ambient temperature sensor. The further data may comprise data from a plurality of vehicles. This may further improve the analysis of the temperature data and may improve the rectification of the temperature data or the detection of anomalous tyre temperature data. In a set of embodiments, the plurality of vehicles comprise vehicles which belong to a common fleet of vehicles. The plurality of vehicles may be connected to a common server which performs the method described above. Additionally, in embodiments wherein the vehicle comprises an electronic device, e.g. a telematics device, arranged on the vehicle, each of the plurality of vehicles may comprise an electronic device which may be configured to communicate with other electronic devices on other vehicles, and/or configured to communicate directly with a remote server. As will be appreciated, this may facilitate the transfer of further data between the plurality of vehicles which may then facilitate the formulation of the expected temperature data.

The determination of the expected temperature data, and in some embodiments the deviation condition, using the further data may be achieved based on a global model which may be generated based on the collection and analysis of further data from a plurality of different vehicles.

The various methods described above may be repeated for each temperature sensor on the vehicle. Thus, in a set of embodiments, the method is repeated for a plurality of different temperature sensors each arranged to measure the temperature of a respective tyre on the vehicle. Accordingly, the tyre temperature data of each temperature sensor on each tyre may be rectified and/or monitored for deviations.

In any of the embodiments described above, the method may be performed locally by a device on the vehicle. For example, the method may be performed by a control unit on the vehicle, e.g. a control unit integrally provided with the vehicle. In another set of examples, the method may be performed by a suitably configured electronic device, e.g. a telematics device, installed on the vehicle. In addition, or alternatively, the method may be performed remotely of the vehicle.

The present invention extends to a central controller or server configured to implement any of the methods described herein. Thus, according to a further aspect of the present invention there is provided a server, for analysing temperature data from a temperature sensor arranged to measure the temperature of a tyre of a vehicle, the server comprising a processor and a tangible memory storing computer-executable instructions that, when executed by the processor, cause the server to:
obtain tyre temperature data from a temperature sensor arranged to measure the temperature of a tyre on a vehicle;
obtain further data indicative of at least one different parameter related to the vehicle;
determine expected temperature data based on the further data;
compare the tyre temperature data to the expected temperature data;
rectify the tyre temperature data based on the comparison of the tyre temperature data to the expected temperature data.

It will of course be appreciated that the term 'server' as used herein means a computer or machine (e.g. server device) connected to a network such that the server sends and/or receives data from other devices (e.g. computers or other machines) on that network. Additionally or alternatively, the server may provide resources and/or services to other devices on the network. The network may be the Internet or some other suitable network. The server may be embodied within any suitable server type or server device, e.g. a file server, application server, communications server, computing server, web server, proxy server, etc. The server may be a single computing device, or may be a distributed system, i.e. the server functionality may be divided across a plurality of computing devices. For example, the server may be a cloud-based server, i.e. its functions may be split across many computers 'on demand'. In such arrangements, server resources may be acquired from one or more data centres, which may be located at different physical locations.

It will thus be appreciated that the processes described above which are carried out by the server, may be carried out by a single computing device, i.e. a single server, or by multiple separate computing devices, i.e. multiple servers. For example, all of the processes may be carried out by a single server which has access to all the relevant information needed. For example, it may have access to tyre temperature data and further data so that a single server can determine the expected temperature data and perform the comparison. Equally, the steps may be carried out by a distributed system which comprises multiple computing devices, i.e. multiple servers.

The server may be configured to carry out any of the methods described herein.

According to a further aspect of the present invention there is provided a system comprising a server as disclosed herein and an electronic device in a vehicle.

In a further set of embodiments, the electronic device is a telematics device. The telematics device may be any device that is capable of collecting/generating further data indicative of at least one different parameter relating to the vehicle. The server-based system may be configured to carry out any of the methods described herein.

According to another aspect of the present invention, there is provided computer program product comprising computer-executable instructions (optionally embodied in a non-transitory computer readable medium) which, when read by a machine, cause the machine to perform the method according to any of the embodiments discussed above.

According to a further aspect of the present invention, there is provided a (non-transitory) computer readable medium having the computer program product of the aspect of the invention discussed above stored therein.

Some general features will now be described that apply equally to any of the embodiments described hereinabove.

The temperature sensor which provides the tyre temperature data may be any temperature sensor that is arranged to measure the temperature of the tyre. The temperature sensor may be arranged to measure the temperature of the internal space of the tyre, i.e. the temperature of air encapsulated by the tyre, and/or be arranged to measure the temperature of the tyre itself, i.e. the temperature of the material of the tyre. In a set of embodiments, the temperature sensor arranged to measure the temperature of a tyre on the vehicle comprises a temperature sensor in a tyre pressure monitoring system (TPMS). The TPMS may further comprise a pressure sensor arranged to measure the pressure of a tyre. The temperature sensor, and optionally the pressure sensor, may be mounted within the tyre, e.g. at the back of a valve which is used to allow air into the tyre.

While the electronic device may possibly be a mobile device located in the vehicle (e.g. a driver's mobile phone), preferably the electronic device is a fixed device in the vehicle, for example the electronic device may be plugged into an On-Board Diagnostics (OBD) port or even integrated with the on-board vehicle computer. The fixed device may include mechanical and/or electrical mounting means (e.g. for connecting to the power supply from the vehicle battery). The electronic device may also be capable of wirelessly transmitting the tyre temperature data and/or the further data, along with any other data generated based on such data. In various examples, the electronic device may comprise one of the LINK tracking devices available from Webfleet Solutions B.V. The electronic device may be temporarily arranged on the vehicle so as to collect driving data, and may be removed once sufficient data is collected. The electronic device may be a telematics device.

In any of the embodiments discussed above, the determination of the expected temperature data based on the further data may be based on a model which takes the further data as an input and outputs expected temperature data. The exact form of the model may depend on the type and quantity of further data which is available. The model may be developed based on historical data and may be developed taking into account further data from a plurality of vehicles.

The embodiments described above may be employed on any suitable vehicle. For example, the vehicle may comprise a car, a motorbike, a van, a bus, a lorry or any other suitable vehicle.

### Brief description of the drawings

One or more non-limiting examples will now be described, by way of example only, and with reference to the accompanying figures in which:
Fig. 1 is a schematic overview of a vehicle comprising a plurality of temperature sensors arranged to measure the temperature of the tyres on the vehicle;
Fig. 2 is a flowchart illustrating the rectification of tyre temperature data as well as the determination of a tyre related parameter;
Fig. 3 is a flowchart illustrating the issuing of a warning based on the tyre temperature data;
Fig. 4 is a graph illustrating the comparison of tyre temperature data to expected temperature data;
Fig. 5 is a graph illustrating calibration of tyre temperature data; and
Fig. 6 is a graph illustrating the comparison of tyre temperature data to expected temperature data over a period time.

### Detailed description of preferred embodiments

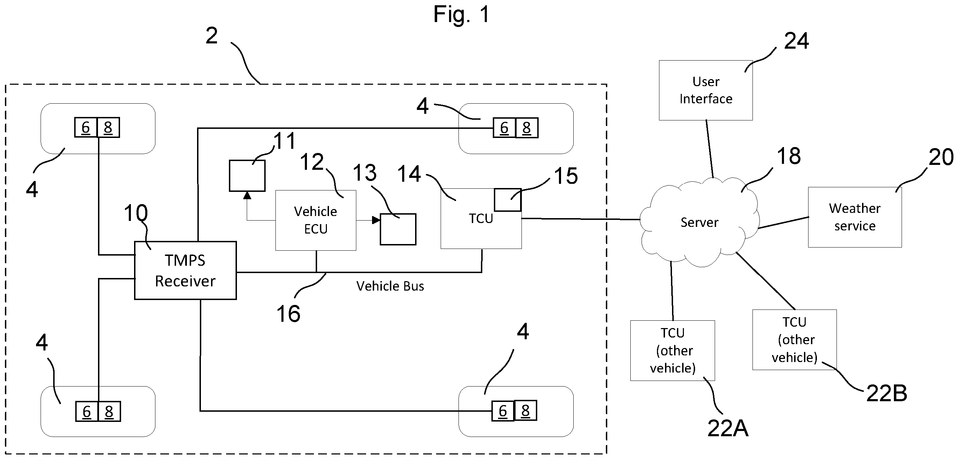

Figure 1 is a schematic representation of a vehicle 2 indicated by the dashed line which is connected to a server 18. The vehicle 2 comprises a plurality of tyres 4. A temperature sensor 6 is arranged to measure the temperature of each tyre 4 and a pressure sensor 8 is arranged to measure the pressure of each tyre 4. The temperature sensors 6 and pressure sensors 8 are connected to a tyre pressure monitoring system (TPMS) receiver 10. The TPMS receiver 10, temperature sensors 6 and pressure sensors 8 together form a TPMS. Whilst the vehicle 2 depicted comprises four tyres 4, it will be appreciated that it may comprise any number of tyres 4. Whilst each of the tyres 4 is shown as having a temperature sensor 6 and pressure sensor 8, this is may not always be the case and in some examples only a subset of the tyres 4 on the vehicle 2 may comprise temperature sensors 6 and pressure sensors 8. Additionally, the pressure sensors 8 may also be omitted.

The TPMS receiver 10 is operatively connected to a vehicle electronic control unit (ECU) 12, and a telematics device in the form of a telematics control unit (TCU) 14, via a vehicle bus 16. As depicted, the vehicle ECU 12 may be operatively connected to a vehicle temperature sensor 13 arranged to measure the ambient temperature of the vehicle 2. The ECU 12 may also be operatively connected to a user interface 11 on the vehicle 2. The user interface 11 may comprise a display in the vehicle 2 which outputs information to a driver of the vehicle 2. The TCU 14 may also comprise a TCU temperature sensor 15 which may be capable of detecting the temperature of the TCU 14 itself. In certain instances, the temperature of the TCU 14 may substantially correspond to the ambient temperature of the environment in which the vehicle 2 is present. As will be appreciated, the vehicle temperature sensor 11 and the TCU temperature sensor 15 may be sources of further data. Similarly, the ECU 12 may also be a source of further data as it may obtain data such as location, speed, acceleration, and/or braking data of the vehicle. The ECU 12 may be connected, via the vehicle bus 16 to various sensors on the vehicle 2 which collect further data. The TCU 14 may also be a source of further data. For example, the TCU 14 may comprise a GPS thus allowing the TCU 14 to generate location, speed, acceleration and/or braking data.

In the embodiment depicted, the TCU 14 is connected to a remote server 18. The TCU 14 may be connected in a wired or wireless manner to the server 18. The server 18 is operatively connected to an weather service 20, TCUs 22A, 22B on other vehicles and a user interface 24. The TCUs 22A, 22B, may provide the server 18, and optionally the ECU 12 and TCU 14, with further data from other vehicles. The weather service 20 may, for example, comprise a repository of information which may serve as further data. For example, the weather service 20 may comprise ambient temperature data and other data such as weather conditions, e.g. rain or snow, for a plurality of different locations. Through knowledge of the vehicles 2 location, it may be possible to interrogate the weather service 20 and obtain appropriate further data relating to the location of the vehicle 2. The server 18 may also be coupled to any other suitable source of further data which may be useful in the analysis of the tyre temperature data obtained from the temperature sensors 6.

Exemplary methods in accordance with embodiments of the present invention will now be described below, with reference to the Figure 1. The method may performed by the ECU 12, the TCU 14 or the server 18. Similarly, the method may be performed by one or more of the ECU 12, the TCU 13 or the server 18 described above. Any of the ECU 12, the TCU 14 or the server 18 may comprise a computer readable medium having a computer program product stored thereon to perform any of the methods described below. The method may also be performed by any other suitable device on the vehicle 2, or remotely of the vehicle 2, that is capable of receiving the tyre temperature data and the further data.

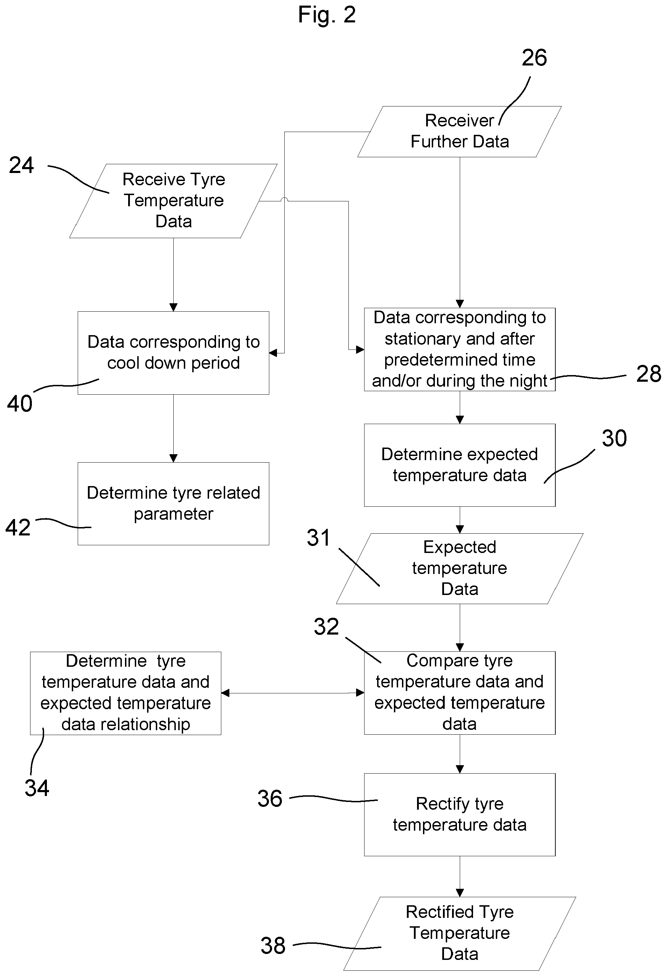

Figure 2 depicts a method in accordance with an embodiment of the present invention. In a first step tyre temperature data 24 is received. The tyre temperature data 24 may be received from one or more of the temperature sensors 6 arranged to measure the temperature of each tyre 4. In another step, further data 26 indicative of at least one different parameter related to the vehicle 2 is received. The further data 26 may be received from any suitable source and comprise any suitable data. For example, the further data may comprise ambient temperature data received from the temperature sensor 13 connected to the ECU 12, the temperature sensor 15 connected to the TCU 14 or it may comprise ambient temperature data received from the weather service 20. Similarly, the further data may comprise any other suitable data, for example other telematics data such as location, speed, acceleration, braking and/or tyre related data from the ECU 12 or the TCU 14.

In step 28, both the further data 24 and the tyre temperature data 26 which corresponds to a period in which the vehicle is stationary and corresponding to a predetermined time after the vehicle becoming stationary is determined. Analysis of data which corresponds to the vehicle 2 being stationary may be achieved by suitably analysing the further data, e.g. location data, to determine when the vehicle 2 was stationary. Similarly, it may be possible to determine from the tyre temperature data 24 when the vehicle 2 was stationary. In addition, or alternatively, in some embodiments the data which corresponds to a period during the night and whilst the vehicle 2 was stationary is analysed. Selection of the appropriate data in this instance may be achieved by interrogating a suitable data source, e.g. the weather service 20, to determine the sunset time at the location of the vehicle 2, and data after the sunset may then be used. Similarly, the sunrise time may also be determined and only data up until sunrise may be used in the subsequent analysis.

In step 30, expected temperature data 31 corresponding to the period in which the vehicle was stationary and after the predetermined time and/or during the night is determined. This expected temperature data 31 is determined based at least in part on the further data 26. For example, when the further data comprises ambient temperature data, the expected temperature data 31 may be determined to be the ambient temperature data. The further data may comprise other data which may impact the expected temperature data 31. For example, the further data may indicate that the vehicle 2 is currently in sunny conditions and so the expected temperature may be based on the ambient temperature data and may be further increased to reflect the additional heating which may occur due to the vehicle 2 being in the sun.

In step 32, a comparison between the tyre temperature data and the expected temperature data is performed. As depicted, this comparison may involve the step 34 of determining a relationship between the tyre temperature data and the expected temperature data 31. As discussed previously, this may involve using regression analysis. The exact form of the analysis performed may depend on the form of the relationship between the tyre temperature data 24 and the expected temperature data 31. For example, the tyre temperature data 24 and the expected temperature data 31 may have a linear relationship and it may be possible to determine an offset and a slope which relates the tyre temperature data 24 to the expected temperature data 31. Of course any other form of relationship may be determined.

Following the comparison of the tyre temperature data 24 and expected temperature data 31, and optionally after the determination of the relationship in step 34, in step 36 the tyre temperature data 24 is rectified. This rectification may involve rectifying the tyre temperature data 24 based on the relationship determined in step 34. This results in rectified tyre temperature data 38. The rectified tyre temperature data 38 may then be used in any required manner and may help to minimise the number of false positive warnings which are generated based on the rectified tyre temperature data 38.

As will be appreciated, the steps described above may be performed in any suitable order. For example, whilst the determination of the expected temperature data 31 is depicted as occurring after the determination of data corresponding to a stationary period and after a predetermined time in step 28, the step 30 of determining expected temperature data may be performed prior to step 28.

The tyre temperature data 24 may comprise any number of tyre temperature readings, and the further data 26 may comprise sufficient data to allow for the determination of sufficient expected temperature data 31 in step 30.

In addition to formation of rectified tyre temperature data 38, the method depicted in Figure 2 also illustrates the optional steps of the determination of a tyre related parameter 42. As depicted, the tyre temperature data 24 and further data 26 which corresponds to a period during which the tyres 4 are cooling may be identified in step 40. This may, for example, be achieved by analysing the tyre temperature data 24 to monitor the change in the tyre temperature readings within the tyre temperature data 24. The data including tyre temperature readings which are decreasing, up to the point where they stop decreasing, or at least to the point at which they stop decreasing as significantly, may be considered to be data which corresponds to a cooling period. The cooling period may also be identified through use of the further data. For example, when the further data comprises ambient temperature data, a threshold temperature which corresponds to the tyres being in a cooled state may be determined based on the ambient temperature data. For example, the threshold temperature may correspond to the ambient temperature of the environment in which the vehicle 2 is present. This threshold temperature may thus be used to set the boundaries of the data which corresponds to the tyres 4 cooling.

In step 42, a tyre related parameter may be determined based on the data corresponding to the cooling period. The type of the further data 26 and the analysis that is performed may depend on the tyre related parameter which is being determined. For example, in the exemplary case whereby a specific heat transfer coefficient for the tyre 4 is determined, in addition to the steps depicted, expected temperature data, similarly to step 31 described above, may also be determined. This expected temperature data may be compared to the tyre temperature data 24 and analysis as to how the tyre 4 cools may allow determination of the tyre specific heat transfer coefficient. Additionally, whilst the Figure depicts the use of the original tyre temperature data 24, steps 40 and 42 may be performed using the rectified tyre temperature data 38. This may improve the analysis of the data and allow a tyre related parameter to be determined more accurately.

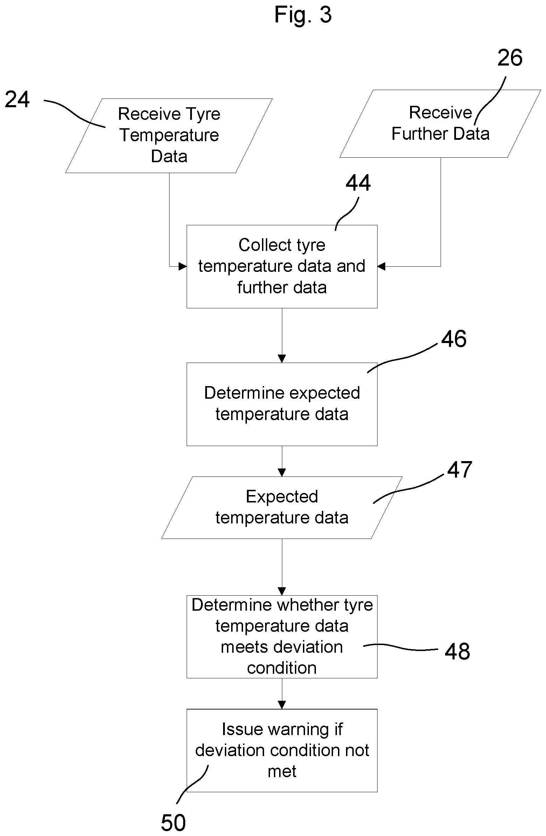

Figure 3 illustrates another embodiment which depicts the detection of tyre temperature data 24 which indicates a tyre related issue. Similarly to the embodiment described above, tyre temperature data 24 is received and further data 26 indicative of a different parameter related to the vehicle is also received. The tyre temperature data 24 and further data 26 may be the same data used in the rectification process shown in Figure 2. However, in some embodiments, the tyre temperature data 24 and further data 26 may comprise different data. For example, the tyre temperature data 24 and the further data 26 may comprise data which corresponds to the vehicle 2 when moving. Accordingly the method depicted in Figure 3 may be performed whilst the vehicle 2 is moving and thus indicate issues with a tyre 4 during movement of the vehicle 2. Of course, the method may nonetheless be applied with the vehicle is stationary.

As depicted, in step 44 tyre temperature data 24 and further data 26 is collected. In step 46, the expected temperature data 47 is determined based at least partially on the further data 26. The further data 26 may comprise any data which may be suitable for use in determining the expected temperature data 47, particularly data which is suitable for use when the vehicle 2 is in motion. The further data 26 may, for example, comprise ambient temperature data, which may be determined from the temperature sensors 13, 15, from the other TCUs 22A, 22B, or from the weather service 20, as well as other suitable data. The other data may, for example, comprise speed, acceleration, braking data as well as other data such as weight data, weather data and/or tyre related data. All of this data may be used to form expected temperature data 47. The determination of the expected temperature data 47 may, for example, comprise taking the ambient temperature data and adjusting this data to account for the speed of the vehicle 2, as well as its recent braking conditions, and also potentially account for the possibility of weather conditions such as rain or snow which may impact the expected tyre temperature. The use of all of this data may improve determination of the expected temperature data 47 and thus minimise the likelihood of the detection of false positives. As will be appreciated, the determination of the expected temperature data 47 performed in step 46 may utilise a model which accounts for the various different further data 26. The model used may be specific to the vehicle 2 being analysed.

In step 48 it is determined whether the tyre temperature data 24 meets a deviation condition. As discussed previously, the deviation condition may be any condition that is used to indicate an issue with a tyre 4. For example, it may comprise an acceptable deviation from the expected temperature data 47. For example, the deviation condition may stipulate that the tyre temperature data can be within a specific temperate difference, e.g. 2 °C, above or below the expected temperature data 47. The deviation condition may be a fixed deviation which is pre-set. However, in some embodiments, the deviation condition may be variable and may at least partially depend on the further data 26. For example, in situations whereby the vehicle is travelling at a variable speed, the deviation condition may allow for a greater variation in temperature to account for the possibility that the tyre temperature may be varying. In contrast, when the vehicle 2 is travelling at a constant speed, variations in temperature may be less and so the range of acceptable temperature values set by the deviation condition may be smaller. This is just one example of how the further data may impact the deviation condition and the further data 26 may at least partially define the deviation condition in any suitable manner.

In the situation where the tyre temperature data 24 does not meet the deviation condition, a warning may be issued in step 50. In some embodiments, this warning may be issued to a driver of the vehicle 2, for example by the ECU 12 causing the issuance of a warning to a user interface 11 on the vehicle 2. The warning may be issued via the user interface 11 irrespective of where the method described above is performed. For example, if the method is performed by the ECU 12, the ECU 12 may directly issue the warning. Where the method is performed by the TCU 12, the TCU 12 may communicate with the ECU 12 to issue the warning by the user interface 11. Similarly, where the method is performed by the remote server 18, the server 18 may also communicate with the ECU 12 to issue the warning via the user interface 11.

Similarly, the warning may also be issued to the user interface 24 connected to the server 18. When the server 18 performs the method described above, the server 18 may communicate directly with the user interface 24. In embodiments wherein the ECU 12, or the TCU 14 performs the method, the ECU 12 or TCU 14 may communicate the warning to the server 18 and the server 18 may go on to issue the warning to the user interface 24.

The use of a deviation condition which is assessed based on the expected temperature data which is formed based on the further data 26 may reduce the number of false positive warnings which are issued. In the embodiment depicted in Figure 3, the tyre temperature data 24 is the temperature data received from the temperature sensors 6 without being rectified. However, as will be appreciated, the tyre temperature data 24 may be rectified to form rectified tyre temperature data 38 as shown in Figure 2, and the rectified tyre temperature data 38 may instead be used in the method shown in Figure 3. This may improve the analysis and further minimise the number of false positive warnings issued.

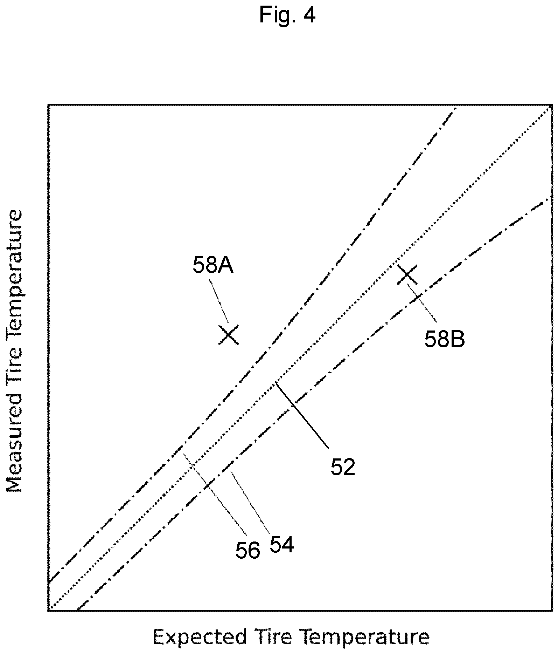

Figure 4 shows a plot of measured tyre temperature data against expected temperature data and illustrates the comparison of tyre temperature data to expected temperature data. Expected temperature data 52 is illustrated by the solid line, and a deviation condition in the form of acceptable temperature range 54, 56 is illustrated by the dashed lines. Tyre temperature data 58A, 58B illustrated by crosses is also plotted. For a given measured temperature value 56A, 56B, the expected temperature corresponding to the tyre temperature value 56A, 56B is determined and the measured temperature value 56A, 56B is then plotted accordingly. As will be appreciated, the expected temperature for the given tyre temperature data 58A, 58B, may be determined based on any suitable further data as described above. For example, for a given tyre temperature data 56A, 56B value the expected temperature data 52 may be determined based on a one or more different items of further data, e.g. a combination of ambient temperature data, motion data relating to the vehicle and/or any other suitable further data such as tyre related data, e.g. tyre type, tyre age etc.

When the expected temperature data 52 has been determined for the tyre temperature data, the tyre temperature data 58A, 58B is then plotted at the relevant points as illustrated. It is then determined whether the tyre temperature data 58A, 58B meets a deviation condition. In the example depicted, it is determined whether the tyre temperature data 58A, 58B falls within the acceptable temperature range 54, 56 illustrated by the dashed lines. As depicted, the tyre temperature measurement 58A falls outside of the range of accepted temperature values 54, 56. As a result, a warning may be issued for this particular tyre temperature measurement 58A. Comparatively, the tyre temperature measurement 58B falls within the range of accepted temperature range 54, 56 and thus no warning may be issued based on this data point. The tyre temperature data 58A, 58B, in the example depicted, may have been collected at different points in time which may be the reason for the different expected temperature data 52 for each of the tyre temperature data points 58A, 58B.

As shown in Figure 4, the range of accepted temperature values 54, 56 illustrated by the dashed lines may be dependent on the further data and may vary accordingly. For example, the range of accepted temperature values 54, 56 may change in a non-linear manner.

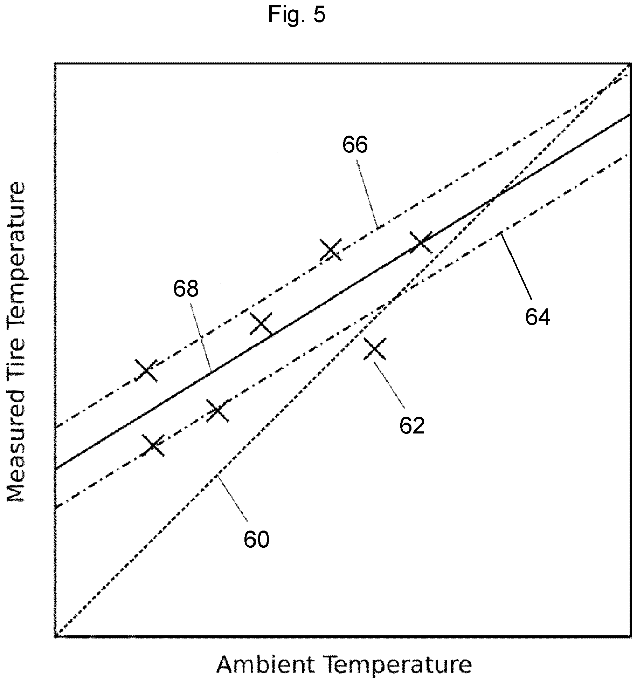

Figure 5 shows a graph illustrating measured tyre temperature, i.e. tyre temperature data, plotted against ambient temperature, i.e. a form of further data which may correspond to expected temperature. The graph illustrates the rectification of tyre temperature data. The data in the graph is illustrative of tyre temperature data which corresponds to a period during which the vehicle is stationary and in which tyre has cooled down to the ambient temperature of the environment in which it is present. When the tyre is at the ambient temperature, the temperature of the tyre should, at least theoretically, match the ambient temperature of the environment in which it is located. Accordingly, the dashed line 60 represents the measured tyre temperature from an ideal temperature sensor. As shown, for such an ideal temperature sensor, the measured tyre temperature matches the ambient temperature. However, as will be appreciated, real temperature sensors may not, for a variety of different reasons, necessarily output a temperature which directly corresponds to the ambient temperature.

The crosses 62, on Figure 5, indicate measured tyre temperatures and are plotted at the ambient temperature at the time at which they were measured. The solid line 68 represents a relationship between the measured tyre temperature data and the ambient temperature data. The solid line 68 includes the offset and slope of the relationship. This relationship may be used to rectify the tyre temperature data. The dashed lines 64, 66 represent the residuals, i.e. the remaining measurement error. Any measured tyre temperature data that falls within the residuals indicated by the dashed lines 64, 66 will be considered to fall within acceptable rectification, i.e. calibration, margins.

Whilst ambient temperature is plotted in the graph described above, any suitable type of further data may be used in order to rectify the tyre temperature data.

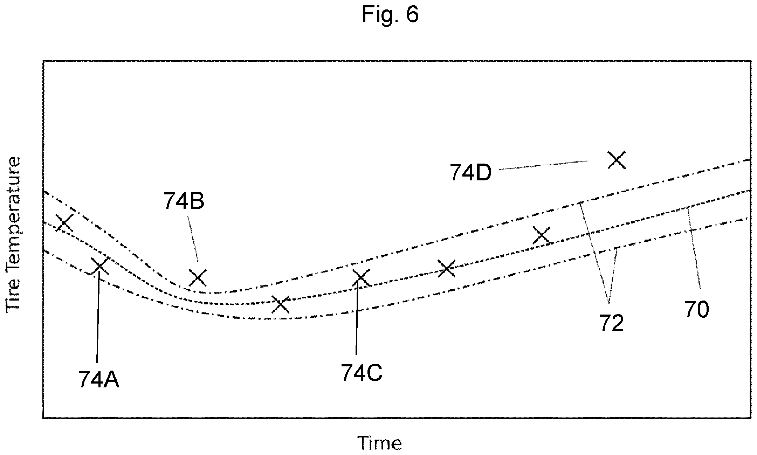

Figure 6 shows a graph illustrating tyre temperature data, i.e. measured tyre temperatures, and expected temperature data over a period of time. As depicted, the expected temperature data 70 corresponding the period of time is plotted. Additionally, upper and lower limits of an acceptable range 72 for the expected temperature data 70 are also plotted. The acceptable range 72 represent a deviation condition. In the exemplary case illustrated, the time period may correspond to a time spanning part of the night and into the morning whereby the expected temperature data 70 indicates a gradual decrease and subsequent increase in expected temperature. The expected temperature data 70, and the acceptable range 72, may be formed on the basis of ambient temperature data, for example. Of course any other further data may also be utilised. Whilst the graph illustrates the expected temperature data and tyre temperature data over a period of time spanning the night into the morning, it will be appreciated that any other period may be plotted and a similar analysis may be performed. For example, expected temperature data and tyre temperature data corresponding to a period during which the vehicle is moving may be analysed.

In addition to the expected tyre temperature data 70, tyre temperature data 74A-74D, i.e. temperature data from a temperature sensor 6 arranged to measure the temperature of the tyre 4, is also plotted on the graph and is depicted by crosses. As will be appreciated, when the tyre temperature data 74A, 74C, for example, is within the acceptable range 72, it may be assumed that the tyre temperature is acceptable, and thus no warning will be issued. However, as depicted, at certain times, the tyre temperature data 74B, 74D may be outside of the acceptable range 72. Accordingly, the tyre temperature data 74B, 74D may not meet a deviation condition and a warning may thus be issued. As discussed previously, the warning may be issued on any suitable user interface. When the tyre temperature data 74B, 74D falls outside of the acceptable ranges 72 it may be concluded that the tyre has become damaged, is too old, or has become worn. A user of the vehicle, or a fleet manager, may then arrange for replacement of the vehicle tyre which may help to ensure the safety of the vehicle.

## Claims

1. A method of analysing tyre temperature data (24) from a temperature sensor (6) arranged to measure the temperature of a tyre (4) on a vehicle (2), the method comprising:
receiving tyre temperature data (24) from the temperature sensor (4);
receiving further data (26) indicative of at least one different parameter related to the vehicle (2);
determining (30, 46) expected temperature data (31, 47) based at least on the further data (26);
comparing (32) the tyre temperature data (24) to the expected temperature data (26); and **characterized by**
rectifying (36) the tyre temperature data (24) based on the comparison of the tyre temperature data to the expected temperature data (31, 47).

2. The method according to claim 1, wherein the further data (26) comprises telematics data.

3. The method according to claim 1 or 2, wherein comparing (32) the tyre temperature data (24, 62) and expected temperature data (31) comprises determining (34) a relationship (68) between the tyre temperature data (24, 62) and the further data (26) and wherein rectifying (36) the tyre temperature data (24) comprises adjusting the tyre temperature data (24, 62) based on the relationship (68).

4. The method according to any preceding claim, wherein the further data (26) comprises ambient temperature data relating to a temperature of an environment in which the vehicle (2) is present.

5. The method according to any one of claims 1-4, wherein the tyre temperature data (24) and further data (26) relate to a period during which the vehicle (2) was stationary and wherein the period begins following a predetermined time after the vehicle (2) has become stationary (28).

6. The method according to any one of claims 1-5, wherein the tyre temperature data (24) and further data (26) comprise data that corresponds to a period during the night and whilst the vehicle (2) was stationary (28).

7. The method according to any preceding claim, further comprising determining a tyre-specific parameter (42) based on the comparison of the tyre temperature data (24) and the expected temperature data (26).

8. The method as claimed in any preceding claim, wherein comparing (32) the tyre temperature data (24) to the expected temperature data (31, 47, 52) comprises determining (48) whether the tyre temperature data (24, 58A, 58B, 74A, 74B, 74C, 74D) meets a deviation condition (54, 56, 72) and further comprising issuing (50) a warning if the tyre temperature data (24, 58A, 58B, 74A, 74B, 74C, 74D) does not meet the deviation condition (54, 56, 72).

9. The method as claimed in claim 8, wherein the deviation condition (54, 56, 72) comprises a range of acceptable temperature values.

10. The method as claimed in 8 or 9, wherein the further data (26) comprises vehicle motion data (12, 14) relating to movement of the vehicle (2) and/or ambient temperature data (13, 15, 20) relating to an environment in which the vehicle (2) is present.

11. The method of any preceding claim, wherein the further data (26) comprises data from at least one other vehicle (22A, 22B).

12. A server (18), for analyzing temperature data from a temperature sensor (6) arranged to measure the temperature of a tyre (4) of a vehicle (2), the server (18) comprising a processor and a tangible memory storing computer-executable instructions that, when executed by the processor, cause the server (18) to:
obtain tyre temperature data (24) from a temperature sensor (6) arranged to measure the temperature of a tyre (4) on a vehicle (2);
obtain further data (26) indicative of at least one different parameter related to the vehicle (2);
determine (30, 46) expected temperature data (31, 47) based on the further data (26);
compare (32) the tyre temperature data (24) to the expected temperature data (31, 47); and
rectify (32) the tyre temperature data (24) based on the comparison of the tyre temperature data (24) to the expected temperature data (31, 37).

13. A computer program product comprising computer-executable instructions which, when read by a machine (12, 14, 18), cause the machine (12, 14, 18) to perform the method according to any one of claims 1 to 11.

14. A computer readable medium having the computer program product of claim 13 stored therein.

## Patentansprüche

1. Verfahren zum Analysieren von Reifentemperaturdaten (24) von einem Temperatursensor (6), der zum Messen der Temperatur eines Reifens (4) an einem Fahrzeug (2) angeordnet ist, wobei das Verfahren umfasst:
Empfangen von Reifentemperaturdaten (24) vom Temperatursensor (4);
Empfangen weiterer Daten (26), die zumindest einen anderen Parameter in Bezug auf das Fahrzeug (2) angeben;
Bestimmen (30, 46) von erwarteten Temperaturdaten (31, 47) basierend zumindest auf den weiteren Daten (26);
Vergleichen (32) der Reifentemperaturdaten (24) mit den erwarteten Temperaturdaten (26); und **gekennzeichnet durch**
Korrigieren (36) der Reifentemperaturdaten (24) basierend auf dem Vergleich der Reifentemperaturdaten mit den erwarteten Temperaturdaten (31, 47).

2. Verfahren nach Anspruch 1, wobei die weiteren Daten (26) Telematikdaten umfassen.

3. Verfahren nach Anspruch 1 oder 2, wobei das Vergleichen (32) der Reifentemperaturdaten (24, 62) und der erwarteten Temperaturdaten (31) das Bestimmen (34) einer Beziehung (68) zwischen den Reifentemperaturdaten (24, 62) und den weiteren Daten (26) umfasst, und wobei das Korrigieren (36) der Reifentemperaturdaten (24) das Anpassen der Reifentemperaturdaten (24, 62) basierend auf der Beziehung (68) umfasst.

4. Verfahren nach einem vorstehenden Anspruch, wobei die weiteren Daten (26) Umgebungstemperaturdaten bezüglich einer Temperatur einer Umgebung, in der sich das Fahrzeug (2) befindet, umfassen.

5. Verfahren nach einem der Ansprüche 1-4, wobei sich die Reifentemperaturdaten (24) und weiteren Daten (26) auf einen Zeitraum beziehen, während dem das Fahrzeug (2) stationär war, und wobei der Zeitraum nach einer vorgegebenen Zeit beginnt, nachdem das Fahrzeug (2) stationär (28) wurde.

6. Verfahren nach einem der Ansprüche 1-5, wobei die Reifentemperaturdaten (24) und weiteren Daten (26) Daten umfassen, die einem Zeitraum während der Nacht, und während dem das Fahrzeug (2) stationär (28) war, entsprechen.

7. Verfahren nach einem vorstehenden Anspruch, das weiter das Bestimmen eines reifenspezifischen Parameters (42) basierend auf dem Vergleich der Reifentemperaturdaten (24) und der erwarteten Temperaturdaten (26) umfasst.

8. Verfahren nach einem vorstehenden Anspruch, wobei das Vergleichen (32) der Reifentemperaturdaten (24) mit den erwarteten Temperaturdaten (31, 47, 52) das Bestimmen (48) umfasst, ob die Reifentemperaturdaten (24, 58A, 58B, 74A, 74B, 74C, 74D) eine Abweichungsbedingung (54, 56, 72) erfüllen, und weiter umfassend das Ausgeben (50) einer Warnung, wenn die Reifentemperaturdaten (24, 58A, 58B, 74A, 74B, 74C, 74D) die Abweichungsbedingung (54, 56, 72) nicht erfüllen.

9. Verfahren nach Anspruch 8, wobei die Abweichungsbedingung (54, 56, 72) einen Bereich akzeptabler Temperaturwerte umfasst.

10. Verfahren nach Anspruch 8 oder 9, wobei die weiteren Daten (26) Fahrzeugbewegungsdaten (12, 14) bezüglich einer Bewegung des Fahrzeugs (2) und/oder Umgebungstemperaturdaten (13, 15, 20) bezüglich einer Umgebung, in der sich das Fahrzeug (2) befindet, umfassen.

11. Verfahren nach einem vorstehenden Anspruch, wobei die weiteren Daten (26) Daten von zumindest einem anderen Fahrzeug (22A, 22B) umfassen.

12. Server (18) zum Analysieren von Temperaturdaten von einem Temperatursensor (6), der zum Messen der Temperatur eines Reifens (4) eines Fahrzeugs (2) angeordnet ist, wobei der Server (18) einen Prozessor und einen materiellen Speicher umfasst, der computerausführbare Anweisungen speichert, die, wenn sie vom Prozessor ausgeführt werden, den Server (18) veranlassen zum:
Erhalten von Reifentemperaturdaten (24) von einem Temperatursensor (6), der zum Messen der Temperatur eines Reifens (4) an einem Fahrzeug (2) angeordnet ist;
Erhalten weiterer Daten (26), die zumindest einen anderen Parameter in Bezug auf das Fahrzeug (2) angeben;
Bestimmen (30, 46) erwarteter Temperaturdaten (31, 47) basierend auf den weiteren Daten (26);
Vergleichen (32) der Reifentemperaturdaten (24) mit den erwarteten Temperaturdaten (31, 47); und
Korrigieren (32) der Reifentemperaturdaten (24) basierend auf dem Vergleich der Reifentemperaturdaten (24) mit den erwarteten Temperaturdaten (31, 37).

13. Computerprogrammprodukt, umfassend computerausführbare Anweisungen, die, wenn sie von einer Maschine (12, 14, 18) gelesen werden, die Maschine (12, 14, 18) veranlassen, das Verfahren nach einem der Ansprüche 1 bis 11 durchzuführen.

14. Computerlesbares Medium, in dem das Computerprogrammprodukt nach Anspruch 13 gespeichert ist.

## Revendications

1. Procédé d'analyse de données de température de pneu (24) provenant d'un capteur de température (6) conçu pour mesurer la température d'un pneu (4) sur un véhicule (2), le procédé comprenant :
la réception de données de température de pneu (24) provenant du capteur de température (4) ;
la réception de données supplémentaires (26) indicatives d'au moins un paramètre différent lié au véhicule (2) ;
la détermination (30, 46) de données de température attendues (31, 47) sur la base au moins des données supplémentaires (26) ;
la comparaison (32) des données de température de pneu (24) avec les données de température attendues (26) ; et **caractérisé par**
la rectification (36) des données de température de pneu (24) sur la base de la comparaison des données de température de pneu avec les données de température attendues (31, 47).

2. Procédé selon la revendication 1, dans lequel les données supplémentaires (26) comprennent des données télématiques.

3. Procédé selon la revendication 1 ou 2, dans lequel la comparaison (32) des données de température de pneu (24, 62) avec les données de température attendues (31) comprend la détermination (34) d'une relation (68) entre les données de température de pneu (24, 62) et les données supplémentaires (26) et dans lequel la rectification (36) des données de température de pneu (24) comprend l'ajustement des données de température de pneu (24, 62) sur la base de la relation (68).

4. Procédé selon une quelconque revendication précédente, dans lequel les données supplémentaires (26) comprennent des données de température ambiante relatives à une température d'un environnement dans lequel le véhicule (2) est présent.

5. Procédé selon l'une quelconque des revendications 1-4, dans lequel les données de température de pneu (24) et les données supplémentaires (26) concernent une période pendant laquelle le véhicule (2) était stationnaire et dans lequel la période commence après un temps prédéterminé après que le véhicule (2) est devenu stationnaire (28).

6. Procédé selon l'une quelconque des revendications 1-5, dans lequel les données de température de pneu (24) et les données supplémentaires (26) comprennent des données qui correspondent à une période pendant la nuit et pendant que le véhicule (2) était stationnaire (28).

7. Procédé selon une quelconque revendication précédente, comprenant en outre la détermination d'un paramètre spécifique au pneu (42) sur la base de la comparaison des données de température de pneu (24) avec les données de température attendues (26).

8. Procédé selon une quelconque revendication précédente, dans lequel la comparaison (32) des données de température de pneu (24) aux données de température attendues (31, 47, 52) comprend la détermination (48) du fait que les données de température de pneu (24, 58A, 58B, 74A, 74B, 74C, 74D) satisfont ou non à une condition d'écart (54, 56, 72) et comprenant en outre l'émission (50) d'un avertissement si les données de température de pneu (24, 58A, 58B, 74A, 74B, 74C, 74D) ne satisfont pas à la condition d'écart (54, 56, 72).

9. Procédé selon la revendication 8, dans lequel la condition d'écart (54, 56, 72) comprend une plage de valeurs de température acceptables.

10. Procédé selon la revendication 8 ou 9, dans lequel les données supplémentaires (26) comprennent des données de mouvement de véhicule (12, 14) relatives au mouvement du véhicule (2) et/ou des données de température ambiante (13, 15, 20) relatives à un environnement dans lequel le véhicule (2) est présent.

11. Procédé selon une quelconque revendication précédente, dans lequel les données supplémentaires (26) comprennent des données provenant d'au moins un autre véhicule (22A, 22B).

12. Serveur (18), destiné à analyser des données de température provenant d'un capteur de température (6) conçu pour mesurer la température d'un pneu (4) d'un véhicule (2), le serveur (18) comprenant un processeur et une mémoire tangible stockant des instructions exécutables par ordinateur qui, lorsqu'elles sont exécutées par le processeur, amènent le serveur (18) à :
obtenir des données de température de pneu (24) provenant d'un capteur de température (6) conçu pour mesurer la température d'un pneu (4) sur un véhicule (2) ;
obtenir des données supplémentaires (26) indicatives d'au moins un paramètre différent lié au véhicule (2) ;
déterminer (30, 46) des données de température attendues (31, 47) sur la base des données supplémentaires (26) ;
comparer (32) les données de température de pneu (24) avec les données de température attendues (31, 47) ; et
rectifier (32) les données de température de pneu (24) sur la base de la comparaison des données de température de pneu (24) avec les données de température attendues (31, 37).

13. Produit de programme informatique comprenant des instructions exécutables par ordinateur qui, lorsqu'elles sont lues par une machine (12, 14, 18), amènent la machine (12, 14, 18) à réaliser le procédé selon l'une quelconque des revendications 1 à 11.

14. Support lisible par ordinateur dans lequel est stocké le produit de programme informatique selon la revendication 13.
